# EUROPÄISCHE PATENTSCHRIFT

(11) **EP 3 438 040 B1**
(45) Veröffentlichungstag und Bekanntmachung des Hinweises auf die Patenterteilung: **04.09.2024**
(21) Anmeldenummer: 18186478.6
(22) Anmeldetag: 31.07.2018
(51) Int. Cl.: B66F 9/075, G01S 17/93, B66F 17/00, B60W 30/095, B60W 40/13, G01S 7/497, G01S 17/42, G01S 17/931, G01S 13/931, B60W 30/09

(54) **VERFAHREN ZUR ÜBERWACHUNG DES FAHRWEGS EINES FLURFÖRDERZEUGS SOWIE EIN FLURFÖRDERZEUG**
INDUSTRIAL TRUCK AND METHOD FOR MONITORING THE PATH OF AN INDUSTRIAL TRUCK
PROCÉDÉ DE SURVEILLANCE DE L'ITINÉRAIRE D'UN CHARIOT DE MANUTENTION AINSI QUE CHARIOT DE MANUTENTION

(30) Priorität: 02.08.2017 DE 102017117545
(43) Veröffentlichungstag der Anmeldung: 06.02.2019
(73) Patentinhaber: Jungheinrich Aktiengesellschaft, 22047 Hamburg (DE)
(72) Erfinder: Göpner, Oliver, 23845 Oering (DE)
(74) Vertreter: Hauck Patentanwaltspartnerschaft mbB

(56) Entgegenhaltungen:
- EP-A1- 2 339 376
- EP-A1- 2 722 687
- EP-B1- 2 339 376
- EP-B1- 2 722 687
- DE-U1- 202005 004 466
- JP-A- 2015 170 284
- JP-A- S6 327 398
- US-A1- 2015 029 332

## Beschreibung

Die Erfindung betrifft ein Verfahren zur Überwachung des Fahrwegs eines Flurförderzeugs sowie ein Flurförderzeug zur Ausführung des Verfahrens
Es sind Flurförderzeuge bekannt, die Assistenzsysteme zur Überwachung ihres Umfeldes aufweisen. Beispielsweise können Überwachungseinrichtungen vorgesehen sein, die den Fahrweg des Flurförderzeugs auf Hindernisse überwachen, um eine Kollision mit Personen oder Sachgütern zu verhindern. Hierfür können Sensoren beispielsweise frontseitig an einem Antriebsteil des Flurförderzeugs oder auch rückseitig an einem Lastteil des Flurförderzeugs vorgesehen sein. Derartige Überwachungseinrichtungen weisen üblicherweise einen statischen Erkennungsbereich auf, überwachen also den Fahrweg nur in einem unveränderlichen Abstand von dem Flurförderzeug. In diesem Fall muss die Überwachungssensorik jedoch auf den maximalen Bremsweg des Flurförderzeugs ausgelegt sein, um stets ein rechtzeitiges Anhalten des Flurförderzeugs zu gewährleisten. Der Bremsweg des Flurförderzeugs ist allerdings nicht immer der gleiche, sondern insbesondere abhängig von der Fahrgeschwindigkeit des Flurförderzeugs sowie dem durch das Flurförderzeug aufgenommenen Lastgewicht. Somit kommt es gerade bei langsamen Geschwindigkeiten bzw. geringem Lastgewicht zu einem unnötigen oder vorzeitigen Anhalten des Flurförderzeugs. Der Bediener verliert somit Zeit.

EP 2 339 376 A1 offenbart ein Verfahren gemäß dem Oberbegriff des Anspruchs 1. Dieses Dokument beschreibt einen Laserscanner für ein Flurförderzeug, der einen Lichtempfänger zur Umwandlung von Empfangslicht in elektrische Signale sowie eine Auswerteeinheit aufweist. Die Auswerteeinheit ist ausgebildet, um die Position von Objekten in einem Überwachungsbereich des Sensors zu ermitteln und zu erkennen, ob sich ein unzulässiges Objekt innerhalb eines in Lage und/oder Ausdehnung dynamisch veränderlichen Schutzfelds befindet. Das sich dynamisch verändernde Schutzfeld kann durch eine Winkeleinstellung im Laser entsprechend angepasst werden.

Aus EP 2 722 687 A1 ist eine Sicherheitsvorrichtung für ein Fahrzeug bekannt, die einen optoelektronischen Sensor zur Erfassung von Objekten in einem Überwachungsbereich aufweist. Zur Einstellung des Überwachungsbereichs wird die Winkelstellung der Lichtablenkeinheit innerhalb der Sicherheitsvorrichtung angepasst.

Aus DE 20 2005 004 466 U1 ist eine Vorrichtung zur Erfassung von Objekten bekannt, deren Schutzfeld an die Fahrzeuggeschwindigkeit angepasst wird. Die Anpassung des Schutzfelds erfolgt innerhalb des optoelektronischen Sensors, der Signale für die Fahrzeugsteuerung bereitstellt.

Aus EP 20 79 065 A2 ist ein Flurförderzeug mit Überwachungssensoren zur Erkennung von Hindernissen bekannt, wobei die Reichweite der Sensoren abhängig von der Geschwindigkeit des Flurförderzeugs softwareseitig angepasst werden kann.

Aus JP 2015-170284 A ist ein automatisch fahrendes Flurförderzeug bekannt, das mit drei Hindernissensoren ausgestattet ist. Hindernissensoren bilden Überwachungsbereiche, deren Grenzen abhängig von Fahrsituationen definiert werden.

Aus JP S63-27398 ist ein Flurförderzeug bekannt, das mit Kollisionssensoren ausgestattet ist. Für den Transport von überbreiten Ladungen ist vorgesehen, dass die Kollisionssensoren horizontal translatorisch auf die Fahrzeugbreite angepasst werden.

Aus US 2015/029332 A1 ist eine Kamera mit einer automatisch gesteuerten Bewegung zum Verfolgen von sich bewegendenden Objekten bekannt. Hierzu wird ein Videobild des Objektes ausgewertet und die Bewegung des Objektes im Bild geschätzt. Aufgrund der geschätzten Bewegung wird die Kamera horizontal und vertikal angesteuert.

Der Erfindung liegt die Aufgabe zu Grunde, ein Verfahren zur Fahrwegüberwachung eines Flurförderzeugs sowie ein Flurförderzeug zur Ausführung des Verfahrens zur Verfügung zu stellen, die bei einfacher Implementation ein Abbremsen des Flurförderzeugs stets zum spätestmöglichen Zeitpunkt erlauben.

Die Erfindung löst die Aufgabe durch ein Verfahren nach Anspruch 1 sowie durch ein Flurförderzeug nach Anspruch 3. Bevorzugte Ausgestaltungen sind Teil der Unteransprüche, der Beschreibung sowie der Figuren.

Das erfindungsgemäße Verfahren zur Überwachung des Fahrwegs eines Flurförderzeugs umfasst die folgenden Schritte:
- Ermitteln eines Bremswegs durch eine Steuereinrichtung des Flurförderzeugs auf Grundlage mindestens eines Betriebsparameters des Flurförderzeugs,
- Einstellen eines durch eine Überwachungseinrichtung überwachten Fahrwegbereichs auf Grundlage des ermittelten Bremswegs durch Verstellen der Ausrichtung der Überwachungseinrichtung,
- Abbremsen des Flurförderzeugs bei Eintritt eines Hindernisses in den durch die Überwachungseinrichtung überwachten Fahrwegbereich.

Das erfindungsgemäße Flurförderzeug umfasst mindestens eine Überwachungseinrichtung zur Überwachung eines Fahrwegbereichs auf Hindernisse, eine Steuereinheit sowie mindestens einen auf die Überwachungseinrichtung wirkenden Aktor, wobei die Steuereinheit dazu ausgebildet ist, auf Grundlage mindestens eines Betriebsparameters des Flurförderzeugs einen Bremsweg des Flurförderzeugs zu ermitteln, den mindestens einen Aktor zum Ausrichten der Überwachungseinrichtung anzusteuern sowie das Flurförderzeug bei Eintritt eines Hindernisses in den überwachten Fahrwegbereich abzubremsen.

Erfindungsgemäß ist also vorgesehen, dass eine Steuereinrichtung des Flurförderzeugs - ständig oder in Intervallen - einen oder mehrere Betriebsparameter des Flurförderzeugs auswertet und anhand der Betriebsparameter einen Bremsweg des Flurförderzeugs ermittelt. Die Steuereinrichtung ermittelt dabei insbesondere den minimal notwendigen Bremsweg, also die Strecke, die das Flurförderzeug bei der aktuellen Betriebssituation mindestens zum Anhalten benötigen wird. Der Bremsweg ist dabei stets derart gewählt, dass ein sicheres Anhalten des Flurförderzeugs ohne Kontakt mit einem eventuellen Hindernis gewährleistet ist.

Abhängig von dem ermittelten Bremsweg wird anschließend die Ausrichtung mindestens einer Überwachungseinrichtung des Flurförderzeugs verstellt und so ein durch die Überwachungseinrichtung überwachter Fahrwegbereich eingestellt. Das erfindungsgemäße Flurförderzeug verfügt hierfür über mindestens einen Aktor, der auf die mindestens eine Überwachungseinrichtung einwirkt. Der mindestens eine Aktor wird durch die Steuereinrichtung angesteuert und veranlasst ein mechanisches Verstellen der Ausrichtung der Überwachungseinrichtung. Durch Ausrichten der Überwachungseinrichtung wird der durch die Überwachungseinrichtung überwachte Fahrwegbereich entsprechend verschoben. Erfindungsgemäß ist die mindestens eine Überwachungseinrichtung nach unten oder oben gekippt oder zu den Seiten gedreht, wie später noch erläutert wird. Bei Eintritt eines Hindernisses, beispielsweise einer Person, in den überwachten Fahrwegbereich der Überwachungseinrichtungen bremst das Flurförderzeug ab. Die Anwesenheit eines Hindernisses innerhalb des überwachten Fahrwegbereichs kann hierbei beispielsweise über die Auswertung von Signallaufzeiten ermittelt werden, wobei von der mindestens einen Überwachungseinrichtung ausgehende Signale durch das Hindernis reflektiert und anschließend durch die Überwachungseinrichtung wieder aufgefangen werden. Die mindestens eine Überwachungseinrichtung kann beispielsweise ein Laserscanner sein.

Erfindungsgemäß erfolgt somit eine dynamische Überwachung des Fahrwegs auf Hindernisse. Beispielsweise kann die Steuereinheit als Betriebsparameter die Fahrgeschwindigkeit des Flurförderzeugs überwachen und bei einer hohen Fahrgeschwindigkeit den durch die Überwachungseinrichtung überwachten Fahrbereich durch Ausrichten der Überwachungseinrichtung weiter vor das Flurförderzeug verlagern als bei einer geringen Geschwindigkeit. Bei einer hohen Geschwindigkeit erkennt das Flurförderzeug somit in den überwachten Fahrwegbereich eindringende Hindernisse bereits in einer größeren Entfernung von dem Flurförderzeug und ermöglicht ein rechtzeitiges Abbremsen. Bei geringen Fahrgeschwindigkeiten wiederum wird die Überwachungseinrichtungen derart ausgerichtet, dass der überwachte Fahrwegbereich sich in unmittelbarer Nähe zum Flurförderzeug befindet und somit eine Erkennung von Hindernissen auch erst nahe des Flurförderzeugs stattfindet. Wegen der geringen Fahrgeschwindigkeit ist ein sicheres Anhalten nichtsdestotrotz möglich. Aufgrund dieser dynamischen Fahrwegüberwachung wird das Flurförderzeug nicht länger unnötig oder zu früh angehalten, sondern idealerweise in unmittelbarer Nähe des Hindernisses. Die Einstellung des überwachten Fahrwegbereichs erfolgt dabei in einfacher Weise nicht softwareseitig, sondern durch eine mechanische Ausrichtung der Überwachungseinrichtung selbst.

Nach einer Ausgestaltung der Erfindung ist der mindestens eine Betriebsparameter ausgewählt aus der Gruppe von: eine Fahrgeschwindigkeit des Flurförderzeugs, ein Lenkwinkel des Flurförderzeugs, eine Hubhöhe eines Lastteils des Flurförderzeugs, ein Lastgewicht einer durch das Flurförderzeug transportierten Last, ein Lastschwerpunkt einer durch das Flurförderzeug transportierten Last. Als Betriebsparameter kann also einer oder mehrere der vorgenannten verwendet werden. Das Flurförderzeug kann zur Überwachung der genannten Betriebsparameter jeweils hierfür bestimmte Sensoren aufweisen, die mit der Steuereinrichtung in Kontakt stehen. Beispielsweise bei einer hohen Fahrgeschwindigkeit, einer großen Hubhöhe des Lastteils bzw. einem hohen Lastgewicht vergrößert sich in der Regel der Bremsweg des Flurförderzeugs. Die Steuereinrichtung kann in diesem Fall über den mindestens einen Aktor die Überwachungseinrichtung derart ausrichten, dass der überwachte Fahrwegbereich in einer entsprechend großen Entfernung vom Flurförderzeug angeordnet ist. Bei einer eher geringen Fahrgeschwindigkeit, einer geringen Höhe des Lastteils bzw. einem kleinen Lastgewicht kann über entsprechende Ausrichtung der Überwachungseinrichtung der Fahrwegbereich wiederum in einer recht geringen Entfernung vom Flurförderzeug befindlich sein. Abhängig von einem Lenkwinkel des Flurförderzeugs kann die Steuereinrichtung die mindestens eine Überwachungseinrichtung beispielsweise derart ausrichten, dass der überwachte Fahrwegbereich nach links oder rechts zu den Seiten des Flurförderzeugs verstellt wird. Der überwachte Fahrwegbereich folgt somit einem Lenkeinschlag. Dies ist insbesondere bei Kurvenfahrten in Warenlagern sinnvoll.

Erfindungsgemäß enthält das Verfahren den Schritt des Neigens der Überwachungseinrichtung um eine horizontale Achse zum Einstellen des überwachten Fahrwegbereichs entlang einer Fahrtachse des Flurförderzeugs und/oder des Schwenkens der Überwachungseinrichtung um eine vertikale Achse zum Einstellen des überwachten Fahrwegbereichs zu den Seiten des Flurförderzeugs. Auch kann der mindestens eine Aktor zum Neigen der Überwachungseinrichtung um eine horizontale Achse ausgebildet sein, um den überwachten Fahrwegbereich entlang einer Fahrtachse des Flurförderzeugs einzustellen, und/oder zum Schwenken der Überwachungseinrichtung um eine vertikale Achse ausgebildet sein, um den überwachten Fahrwegbereich zu den Seiten des Flurförderzeugs einzustellen. Insbesondere können auch mindestens zwei Aktoren vorgesehen sein, wobei ein erster Aktor zum Neigen der Überwachungseinrichtung um eine horizontale Achse ausgebildet ist, um den überwachten Fahrwegbereich entlang einer Fahrtachse des Flurförderzeugs einzustellen, und ein zweiter Aktor zum Schwenken der Überwachungseinrichtung um eine vertikale Achse ausgebildet ist, um den überwachten Bereich zu den Seiten einzustellen. Die Ausrichtung der mindestens einen Überwachungseinrichtung kann also durch einen Neigen bzw. ein Schwenken der Überwachungseinrichtung erfolgen. Ein Neigen der Überwachungseinrichtung um eine horizontale Achse bezeichnet hierbei eine Ausrichtung nach unten in Richtung des das Flurförderzeug tragenden Bodens oder nach oben in entgegengesetzte Richtung. Die horizontale Achse erstreckt sich also parallel zum Boden und insbesondere senkrecht zu einer Fahrtrichtung des Flurförderzeugs. Das Schwenken der mindestens einen Überwachungseinrichtung bezeichnet eine Ausrichtung der Überwachungseinrichtung nach links oder rechts, also zu den Seiten des Flurförderzeugs. Die vertikale Achse steht dabei senkrecht auf dem Boden und insbesondere auch senkrecht zu der Fahrtrichtung. Das Neigen der mindestens einen Überwachungseinrichtung ermöglicht ein Einstellen des überwachten Fahrwegbereichs entlang der Fahrtachse und somit eine unterschiedliche Distanzierung des überwachten Fahrwegbereichs von dem Flurförderzeug. Das Schwenken der Überwachungseinrichtungen erlaubt ein Verstellen des überwachten Fahrwegbereichs abweichend von der Fahrtachse nach rechts oder links zu den Seiten, was insbesondere bei einer Kurvenfahrt von Bedeutung ist. Die mindestens eine Überwachungseinrichtung kann dabei insbesondere abhängig von dem Lenkwinkel des Flurförderzeugs zu den Seiten verschwenkt werden, wie oben bereits angesprochen. Der mindestens eine Aktor des Flurförderzeugs kann derart ausgestaltet sein, dass er sowohl das Neigen als auch das Schwenken der Überwachungseinrichtungen ermöglicht. Es können jedoch auch unterschiedliche Aktoren zur Durchführung der genannten Bewegungen vorgesehen sein.

Im Folgenden wird die Erfindung anhand von Figuren erläutert. Es zeigen:
- Figur 1: ein erfindungsgemäße Flurförderzeug in einer seitlichen Ansicht,
- Figur 2: das Flurförderzeug aus Figur eins in einer Draufsicht, und
- Figur 3: eine Regelung zur Einstellung der Überwachungseinrichtung(en).

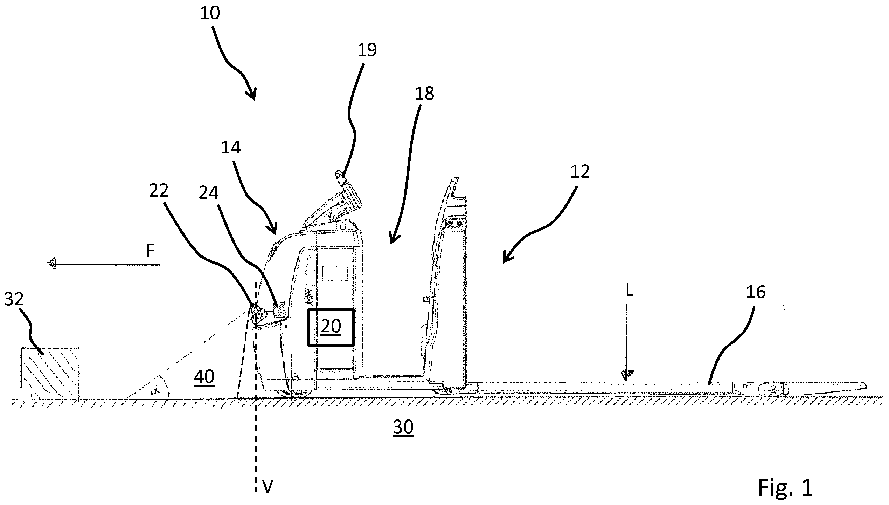

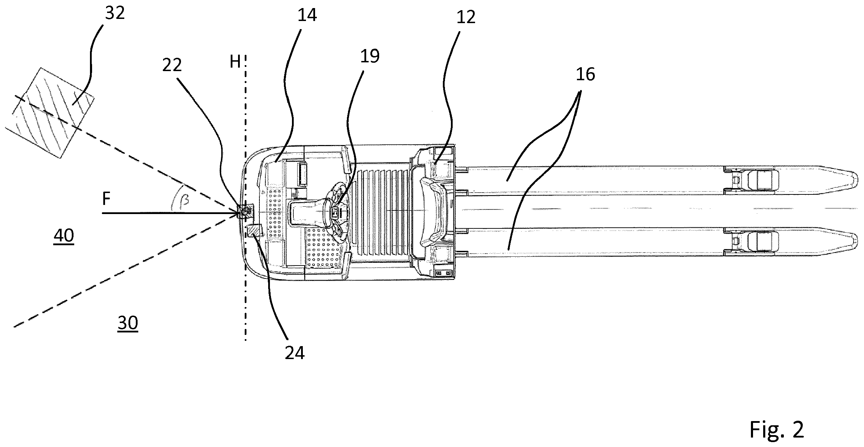

Die Figuren 1 und 2 zeigen ein Flurförderzeug 10 mit einem Lastteil 12 und einem Antriebsteil 14. Das Lastteil 12 weist zwei Lastgabeln 16 auf zur Aufnahme einer mit einem Lastgewicht L auf die Lastgabeln 16 wirkenden Last. Zudem verfügt das Flurförderzeug 10 über einen Führerstand 18 für eine Bedienperson sowie ein Bedienelement 19 zur Steuereinrichtung des Flurförderzeugs. Mit dem Bezugszeichen 20 ist schematisch eine Steuereinrichtung des Flurförderzeugs dargestellt. Frontseitig des Flurförderzeugs 10 ist an dem Antriebsteil 14 eine Überwachungseinrichtungen 22 angeordnet, die über einen Aktor 24 ausgerichtet werden kann. Die Überwachungseinrichtung 22 erzeugt einen insbesondere kegelförmigen Erkennungsbereich, der die Überwachung des Fahrwegbereichs 40 des Fahrwegs 30 ermöglicht.

Die Steuereinrichtung 20 überwacht durch einen oder mehrere nicht dargestellte Sensoren einen oder mehrere Betriebsparameter des Flurförderzeugs 10 und errechnet anhand derer einen benötigten Bremsweg des Flurförderzeugs. Abhängig von dem ermittelten Bremsweg steuert die Steuereinrichtung 20 den Aktor 24 an, welche wiederum die Überwachungseinrichtung 22 ausrichtet. Der Aktor 24 kann die Überwachungseinrichtung 22 dabei zum einen um die horizontale Achse H unter Veränderung eines Neigungswinkels α nach unten bzw. nach oben neigen und um die Vertikalachse V unter Veränderung eines Schwenkwinkels β zu den Seiten schwenken.

Der in Figur 1 dargestellte überwachte Fahrwegbereich 40 befindet sich recht nah an den Flurförderzeug 10. Diese Einstellung wird gewählt, wenn der mindestens eine Betriebsparameter einen eher geringen Bremsweg ergibt, beispielsweise aufgrund einer geringen Fahrgeschwindigkeit. Dies hat den Vorteil, dass das Flurförderzeug 10 nicht zu frühzeitig aufgrund des Hindernisses 32 abbremst und in einer recht großen Entfernung von diesem stehen bleibt. Sollte die Auswertung des mindestens einen Betriebsparameters, beispielsweise der Fahrgeschwindigkeit, ergeben, dass ein größerer Bremsweg nötig ist, so wird der überwachte Fahrwegbereich 40 ausgehend von der Figur 1 weiter nach vom in Fahrtrichtung entlang der Fahrtachse F verstellt. Hierbei verringert sich der Neigungswinkel α und das Hindernis 32 gelangt in den überwachten Fahrwegbereich 40. Das Hindernis 32 wird sodann von der Überwachungseinrichtung 22 detektiert und das Flurförderzeug abgebremst. Zum Abbremsen kann die Steuereinrichtung 20 beispielsweise nicht dargestellte Bremsen des Flurförderzeugs 10 ansteuern. Das Flurförderzeug 10 kann somit auch bei erhöhter Geschwindigkeit rechtzeitig auf das Hindernis 32 reagieren.

Auch kann die Überwachungseinrichtung 22 durch den Aktor 24 zu den Seiten des Flurförderzeugs 10 verschwenkt werden, sodass sich der Winkel β zwischen einem Schenkel des überwachten Fahrwegbereichs 40 und der Fahrtachse F vergrößert oder verkleinert. Ein Verschwenken der Überwachungseinrichtung 22 kann dabei insbesondere in Abhängigkeit von einem Lenkwinkel des Flurförderzeugs 10 erfolgen. Lenkt beispielsweise eine auf dem Führerstand 18 befindliche Bedienperson über das Bedienelement 19 nach rechts so kann sich der Erkennungsbereich und somit der überwachte Fahrwegbereich 40 ebenfalls nach rechts (in Figur 2 also nach oben) bewegen. Somit können frühzeitig in den Fahrweg eintretende Hindernisse erkannt werden. Bei einer Lenkung nach links kann der überwachte Fahrwegbereich 40 ebenfalls nach links (also in Figur 2 nach unten) verstellt werden. Dabei kann der überwachte Fahrwegbereich 40 durch entsprechend starkes Verschwenken der Überwachungseinrichtung 22 so weit nach links verstellt werden, dass sich das Hindernis 32 nicht länger innerhalb des überwachten Fahrwegbereichs 40 befindet. Das Hindernis 32 ist in dem Fall für das Flurförderzeug 10 nicht relevant, da aufgrund des Lenkeinschlags das Flurförderzeug 10 entlang einer Linkskurve an dem Hindernis 32 vorbeifährt. Somit kommt es nicht zu einem unerwünschten Anhalten des Flurförderzeugs 10 aufgrund des Hindernisses 32, von dem in diesem Fall keine Kollisionsgefahr ausgeht.

Grundsätzlich kann auch vorgesehen sein zwei Aktoren zur Ausrichtung der Überwachungseinrichtung 22 zu verwenden. Eine erster Aktor kann dann zum Neigen und ein zweiter Aktor zum Verschwenken der Überwachungseinrichtung 22 ausgebildet sein, wie oben erläutert.

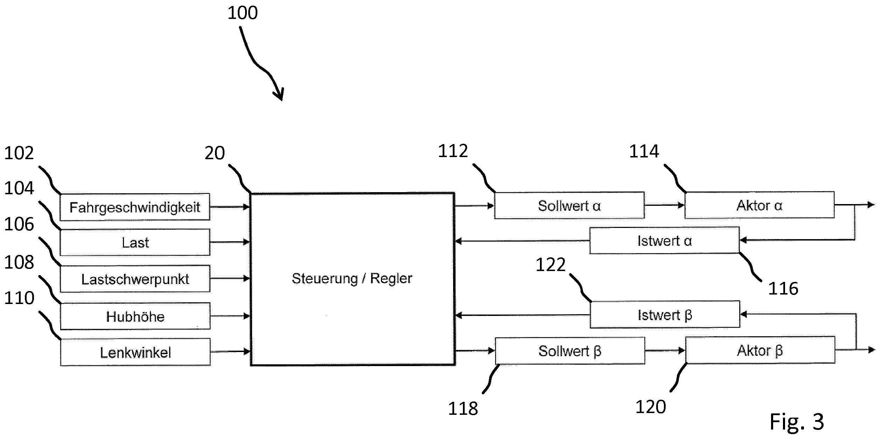

Figur 3 zeigt ein Regelungsschema mit Ein- und Ausgangswerten der Steuereinrichtung 20. Als Betriebsparameter können in die Steuereinrichtung 20 unter anderem beispielsweise eine Fahrgeschwindigkeit 102, eine Last 104, ein Lastschwerpunkt 106, eine Hubhöhe 108 des Lastteils 12 und oder ein Lenkwinkel 110 eingehen. Die Steuereinrichtung 20 berechnet dabei, insbesondere in Echtzeit, aus den Fahrzeugparametern 102-110 einen benötigten Bremsweg des Flurförderzeugs. Abhängig von dem errechneten Bremsweg gibt die Steuereinrichtung 20 einen Sollwert α (Bezugszeichen 112) für den Neigungswinkel α an einen ersten Aktor 114 sowie einen Sollwert β (Bezugszeichen 118) für den Schwenkwinkel β an den zweiten Aktor 120. Die Aktoren 114, 120 richten daraufhin die Überwachungseinrichtung 22 entsprechend aus. Die aktuelle Winkeleinstellung des ersten Aktors 114 wird durch einen Sensor überwacht und als Istwert α (Bezugszeichen 116) zurück an die Steuereinrichtung 20 gegeben. Ebenso wird die aktuelle Winkeleinstellung des zweiten Aktors 120 mittels eines Sensors überwacht und der aktuelle Istwert β des Schwenkwinkels (Bezugszeichen 122) an die Steuereinrichtung 20 zurückgegeben. Durch Auswertung der Istwerte α, β ist der Steuereinrichtung 20 stets die aktuelle Ausrichtung der Überwachungseinrichtung 22 bekannt, so dass ein zielgenaues Verstellen der Ausrichtung erfolgen kann.

Abweichend von Figur 3 kann jedoch auch lediglich ein Aktor vorgesehen sein, der sowohl den Neigungswinkel α wie auch den Schwenkwinkel β einstellen kann. Es kann dann vorgesehen sein, dass sowohl der Sollwert α sowie auch der Sollwert β von der Steuereinrichtung 20 an diesen einen Aktor weitergegeben werden und der Aktor wiederum die Überwachungseinrichtung 22 ausrichtet und die jeweiligen Istwerte für α und β an die Steuereinrichtung 20 zurückgibt.

### Bezugszeichenliste

- 10: Flurförderzeug
- 12: Lastteil
- 14: Antriebsteil
- 16: Lastgabeln
- 18: Führerstand
- 19: Bedienelement
- 20: Steuereinrichtung
- 22: Überwachungseinrichtung
- 24: Aktor
- 30: Fahrweg
- 32: Hindernis
- 40: überwachter Fahrwegbereich
- 100: Steuerungssystem
- 102: Fahrgeschwindigkeit
- 104: Last
- 106: Lastschwerpunkt
- 108: Hubhöhe
- 110: Lenkwinkel
- 112: Sollwert Neigungswinkel
- 114: erster Aktor
- 116: Istwert Neigungswinkel
- 118: Sollwert Schwenkwinkel
- 120: zweiter Aktor
- 122: Istwert Schwenkwinkel
- F: Fahrtachse
- H: horizontale Achse
- L: Lastgewicht
- V: vertikale Achse
- α: Neigungswinkel
- β: Schwenkwinkel

## Patentansprüche

1. Verfahren zur Überwachung des Fahrwegs eines Flurförderzeugs (10), mit den Schritten:
• Ermitteln eines Bremswegs durch eine Steuereinrichtung (20) des Flurförderzeugs (10) auf Grundlage mindestens eines Betriebsparameters des Flurförderzeugs (10),
• Einstellen eines durch eine Überwachungseinrichtung (22) überwachten Fahrwegbereichs (40) auf Grundlage des ermittelten Bremswegs,
• Abbremsen des Flurförderzeugs (10) bei Eintritt eines Hindernisses (32) in den durch die Überwachungseinrichtung (22) überwachten Fahrwegbereich (40),
**dadurch gekennzeichnet, dass**
• durch Verstellen der Ausrichtung der Überwachungseinrichtung (22), der überwachte Fahrwegbereich eingestellt wird, wobei durch Neigen der Überwachungseinrichtung (22) um eine horizontale Achse (H) ein Einstellen des überwachten Fahrwegbereichs (40) entlang einer Fahrtachse (F) des Flurförderzeugs (10) und/oder durch Schwenken der Überwachungseinrichtung (22) um eine vertikale Achse (V) ein Einstellen des überwachten Fahrwegbereichs (40) zu den Seiten des Flurförderzeugs (10) erfolgt.

2. Verfahren nach Anspruch 1, **dadurch gekennzeichnet, dass** der mindestens eine Betriebsparameter ausgewählt ist aus der Gruppe von: eine Fahrgeschwindigkeit des Flurförderzeugs, ein Lenkwinkel des Flurförderzeugs, eine Hubhöhe eines Lastteils des Flurförderzeugs, ein Lastgewicht einer durch das Flurförderzeug transportierten Last, ein Lastschwerpunkt einer durch das Flurförderzeug transportierten Last.

3. Flurförderzeug, umfassend mindestens eine Überwachungseinrichtung (22) zur Überwachung eines Fahrwegbereichs (40) auf Hindernisse (32), eine Steuereinheit (20) sowie mindestens einen auf die Überwachungseinrichtung (22) wirkenden Aktor (24), wobei die Steuereinheit (20) dazu ausgebildet ist, auf Grundlage mindestens eines Betriebsparameters des Flurförderzeugs (10) einen Bremsweg des Flurförderzeugs (10) zu ermitteln, sowie das Flurförderzeug (10) bei Eintritt eines Hindernisses (32) in den überwachten Fahrwegbereich (40) abzubremsen, **dadurch gekennzeichnet, dass** die Steuereinheit ferner dazu ausgebildet ist, den mindestens einen Aktor (24) zum Ausrichten der Überwachungseinrichtung (22) anzusteuern, wobei der mindestens eine Aktor (24) zum Neigen der Überwachungseinrichtung (22) um eine horizontale Achse (H) ausgebildet ist, um den überwachten Fahrwegbereich (40) entlang einer Fahrtachse (F) des Flurförderzeugs (10) einzustellen, und/oder der mindestens eine Aktor (24) zum Schwenken der Überwachungseinrichtung (22) um eine vertikale Achse (V) ausgebildet ist, um den überwachten Fahrwegbereich (40) zu den Seiten des Flurförderzeugs (10) einzustellen.

4. Flurförderzeug nach Anspruch 3, **dadurch gekennzeichnet, dass** der mindestens eine Betriebsparameter ausgewählt ist aus der Gruppe von: eine Fahrgeschwindigkeit des Flurförderzeugs, ein Lenkwinkel des Flurförderzeugs, eine Hubhöhe eines Lastteils des Flurförderzeugs, ein Lastgewicht einer durch das Flurförderzeug transportierten Last, ein Lastschwerpunkt einer durch das Flurförderzeug transportierten Last.

5. Flurförderzeug nach Anspruch 3, **dadurch gekennzeichnet, dass** mindestens zwei Aktoren vorgesehen sind, wobei ein erster Aktor zum Neigen der Überwachungseinrichtung um eine horizontale Achse ausgebildet ist, um den überwachten Fahrwegbereich entlang einer Fahrtachse des Flurförderzeugs einzustellen, und ein zweiter Aktor zum Schwenken der Überwachungseinrichtung um eine vertikale Achse ausgebildet ist, um den überwachten Bereich zu den Seiten einzustellen.

6. Flurförderzeug nach einem der Ansprüche 3 bis 5, **dadurch gekennzeichnet, dass** die Überwachungseinrichtung ein Laserscanner ist.

## Claims

1. A method for monitoring the path of an industrial truck (10), comprising the following steps:
• determining a braking distance by means of a control apparatus (20) of the industrial truck (10) on the basis of at least one operating parameter of the industrial truck (10),
• adjusting a path region (40) monitored by a monitoring apparatus (22) on the basis of the determined braking distance,
• braking the industrial truck (10) in the event of an obstacle (32) in the path region (40) monitored by the monitoring apparatus (22),
**characterized in that**
• the monitored path region is adjusted by adjusting the orientation of the monitoring apparatus (22), wherein the monitored path region (40) along a travel axis (F) of the industrial truck (10) is adjusted by tilting the monitoring apparatus (22) about a horizontal axis (H) and/or the monitored path region (40) to the sides of the industrial truck (10) is adjusted by swiveling the monitoring apparatus (22) about a vertical axis (V).

2. The method according to claim 1, **characterized in that** the at least one operating parameter is selected from the group of: a travel speed of the industrial truck, a steering angle of the industrial truck, a lift height of a load part of the industrial truck, a load weight of a load transported by the industrial truck, a load center of a load transported by the industrial truck.

3. An industrial truck, comprising at least one monitoring apparatus (22) for monitoring a path region (40) for obstacles (32), a control unit (20), and at least one actuator (24) that acts on the monitoring apparatus (22), wherein the control unit (20) is designed to determine a braking distance of the industrial truck (10) on the basis of at least one operating parameter of the industrial truck (10), and to brake the industrial truck (10) in the event of an obstacle (32) in the monitored path region (40), **characterized in that** the control unit is further designed to control the at least one actuator (24) for orienting the monitoring apparatus (22), wherein the at least one actuator (24) is designed to tilt the monitoring apparatus (22) about a horizontal axis (H) in order to adjust the monitored path region (40) along a travel axis (F) of the industrial truck (10), and/or the at least one actuator (24) is designed to swivel the monitoring apparatus (22) about a vertical axis (V) in order to adjust the monitored path region (40) to the sides of the industrial truck (10).

4. The industrial truck according to claim 3, **characterized in that** the at least one operating parameter is selected from the group of: a travel speed of the industrial truck, a steering angle of the industrial truck, a lift height of a load part of the industrial truck, a load weight of a load transported by the industrial truck, a load center of a load transported by the industrial truck.

5. The industrial truck according to claim 3, **characterized in that** at least two actuators are provided, wherein a first actuator is designed to tilt the monitoring apparatus about a horizontal axis in order to adjust the monitored path region along a travel axis of the industrial truck, and a second actuator is designed to swivel the monitoring apparatus about a vertical axis in order to adjust the monitored region to the sides.

6. The industrial truck according to one of claims 3 to 5, **characterized in that** the monitoring apparatus is a laser scanner.

## Revendications

1. Procédé de surveillance de l'itinéraire d'un chariot de manutention (10), comprenant les étapes suivantes :
• détermination d'une distance de freinage par un dispositif de commande (20) du chariot de manutention (10) sur la base d'au moins un paramètre de fonctionnement du chariot de manutention (10),
• réglage d'une section d'itinéraire (40) surveillée par un dispositif de surveillance (22) sur la base de la distance de freinage déterminée,
• freinage du chariot de manutention (10) lors de l'apparition d'un obstacle (32) dans la section d'itinéraire (40) surveillée par le dispositif de surveillance (22),
**caractérisé en ce que**
• la section d'itinéraire surveillée est réglée par ajustement de l'orientation du dispositif de surveillance (22), dans lequel un réglage de la section d'itinéraire (40) surveillée le long d'un axe de déplacement (F) du chariot de manutention (10) est effectué par inclinaison du dispositif de surveillance (22) autour d'un axe horizontal (H) et/ou un réglage de la section d'itinéraire (40) surveillée vers les côtés du chariot de manutention (10) étant effectué par pivotement du dispositif de surveillance (22) autour d'un axe vertical (V).

2. Procédé selon la revendication 1, **caractérisé en ce que** l'au moins un paramètre de fonctionnement est sélectionné parmi le groupe comprenant : une vitesse de déplacement du chariot de manutention, un angle de direction du chariot de manutention, une hauteur de levage d'une partie de charge du chariot de manutention, un poids de charge d'une charge transportée par le chariot de manutention, un point de gravité de charge d'une charge transportée par le chariot de manutention.

3. Chariot de manutention, comportant au moins un dispositif de surveillance (22) destiné à surveiller une section d'itinéraire (40) quant à des obstacles (32), une unité de commande (20) ainsi qu'au moins un acteur (24) agissant sur le dispositif de surveillance (22), dans lequel l'unité de commande (20) est conçue pour déterminer une distance de freinage du chariot de manutention (10) sur la base d'au moins un paramètre de fonctionnement du chariot de manutention (10), et pour freiner le chariot de manutention (10) lors de l'apparition d'un obstacle (32) dans la section d'itinéraire (40) surveillée, **caractérisé en ce que** l'unité de commande est en outre conçue pour actionner l'au moins un acteur (24) en vue de l'orientation du dispositif de surveillance (22), dans lequel l'au moins un acteur (24) est conçu pour incliner le dispositif de surveillance (22) autour d'un axe horizontal (H), pour régler la section d'itinéraire (40) surveillée le long d'un axe de déplacement (F) du chariot de manutention (10), et/ou l'au moins un acteur (24) est conçu pour faire pivoter le dispositif de surveillance (22) autour d'un axe vertical (V), afin de régler la section d'itinéraire (40) surveillée vers les côtés du chariot de manutention (10).

4. Chariot de manutention selon la revendication 3, **caractérisé en ce que** l'au moins un paramètre de fonctionnement est sélectionné parmi le groupe comprenant : une vitesse de déplacement du chariot de manutention, un angle de direction du chariot de manutention, une hauteur de levage d'une partie de charge du chariot de manutention, un poids de charge d'une charge transportée par le chariot de manutention, un point de gravité de charge d'une charge transportée par le chariot de manutention.

5. Chariot de manutention selon la revendication 3, **caractérisé en ce qu'**il est prévu au moins deux acteurs, dans lequel un premier acteur est conçu pour incliner le dispositif de surveillance autour d'un axe horizontal, afin de régler la section d'itinéraire surveillée le long d'un axe de déplacement du chariot de manutention, et un deuxième acteur est conçu pour faire pivoter le dispositif de surveillance autour d'un axe vertical, afin de régler la section surveillée vers les côtés.

6. Chariot de manutention selon l'une des revendications 3 à 5, **caractérisé en ce que** le dispositif de surveillance est un scanner laser.
